# EUROPEAN PATENT APPLICATION

(11) **EP 2 233 008 A1**
(43) Date of publication of application: **29.09.2010**
(21) Application number: 09397513.4
(22) Date of filing: 28.04.2009
(51) Int. Cl.: A21D 13/00, A23L 1/00, A23P 1/08

(54) **Manually openable bakery product and method for the manufacture thereof**

(30) Priority: 27.03.2009 FI 20095323
(71) Applicant: Myllyn Paras Oy Hallinto, 05801 Hyvinkää (FI)
(72) Inventor: Heinonen, Iiro, 05801, Hyvinkää (FI)
(74) Representative: Arvela, Sakari Mikael

(57) **Abstract**

The invention relates to a bakery product and a manufacturing method for it, in which dough is taken and a baking preform of the desired shape is formed, in which at least two dough layers are formed on top of each other, between the opposing surfaces of which, in at least part of the area, a separating fat is added for forming a splitting zone into the bakery product. After this, the preform is leavened and is then baked or frozen.

## Description

The present invention relates to bakery products and their manufacturing methods. In particular, the invention relates to openable bakery products, such rolls, and to a method for manufacturing them. More specifically, the invention relates to bakery products openable by hand and their manufacturing methods, according to the preambles to Claims 1 and 10.

Openable bakery products intended for daily use by consumers, such rolls and bread pieces intended to be split, are usually manufactured as separate items, or by cutting suitable pieces from a dough preform. Bakery products manufactured as separate items are conventionally rolls, or small whole loaves. Also on the market are rolls intended to be roasted and splittable bread pieces, which are manufactured by cutting or stamping suitably shaped pieces from a dough preform. After leavening and baking, the products are packed, so that it remains the consumer's task to split the products by tearing them or using a cutting tool.

Alternatively, in order to facilitate use, the product is pre-cut, for example, by sawing or tearing, making it easy for the consumer to open the product by tearing it open along a pre-cut seam. Typically, in connection with pre-cutting, the bottom and top parts of the bakery product, such as a roll, are not cut completely separate from each other, but instead a neck or back part, which holds the halves together, is left to connect them.

However, there are considerable drawbacks associated with the prior art. The cutting processes used to manufacture bakery products intended to be opened, split, or tom open without tools, are disadvantageous, because pre-cutting typically requires a separate freezing stage to facilitate cutting, or a cutting or tearing device intended to split fresh bread, or both of these. The automatic splitting of fresh bread is a challenging process, because fresh bread tends to adhere to the sides of the cutting blade. In addition, cutting adds a production stage between baking and packing, which increases the throughput time and locks up capital in unfinished production. A particular problem with pre-cutting is also that the quality problems related to it, such as slanting cutting seams, can reduced the yield of the process. The cutting stage is also often a production bottleneck, which it would be advantageous to eliminate. In addition, the ready-split products begin to dry rapidly around the cutting seam, because cutting breaks the protective crust formed during the baking of the product.

The invention is intended to eliminate at least some of the drawbacks of the prior art described above and to create an improved bakery product and a manufacturing method for it.

In the bakery-product manufacturing method according to the invention, dough is taken and a baking lump ofthe desired shape is formed, in which at least two dough layers are created, in at least part of the area of the opposing surfaces of which separating fat is added, in order to form a splitting zone in the bakery product. After this, the lump is allowed to rise and is baked or frozen.

More specifically, the manufacturing method according to the invention is characterized by what is stated in the characterizing portion of Claim 1.

The bakery product openable by hand according to the invention comprises two cover parts essentially facing each other, which are made from a yeast dough. Between the cover parts is a splitting zone, the fat content of which is substantial ly greater than in the cover parts outside the splitting zone. After baking the bakery product, the cover parts can be separated from each other without tools, from the area of the splitting zone.

More specifically, the bakery product openable by hand according to the invention is characterized by what is stated in the characterized portion of Claim 10.

Considerable advantages are achieved with the aid of the invention. This is because the method according to the invention provides a possibility to manufacture bakery products that can be opened or split by hand, especially rolls, economically, without the pre-cutting stage typical ofthe prior art. Thus, separate cutting or tearing devices are not needed for pre-cutting. The product manufactured using the method is easy to split, for example, by taking it in the palms of one's hands and separating the halves from each other by pulling apart with one's thumbs, whereby the consumer does not have to ensure the detachment of the pre-cut seams. The buttering and filling surfaces of the baker product according to the invention, i.e. the surfaces on each side of the splitting zone, are, however, rough, porous, and soft, as in normal split bread, as the halves of the product remained closed during baking and their seam does not become crusted throughout. In addition, by means of the simple manufacturing method, a bakery product that can be split is created, which remains pleasantly moist and juicy at the splitting seam, compared, for example, to bread cut by sawing, as the splitting seam, which remains closed during baking, does not become dry before the product is used. In addition, the separating oil or other fat between the cover parts of the product creates a situation, in which, in a product manufactured using the process, there are more toasted aromatic surfaces than in a pre-cut product, which become browned during baking and add to the sensory value experienced by the consumer.

The invention is suitable for the manufacture of both semi-finished and finished consumer products. This is because it has been observed in connection with the invention that freezing of the product prior to baking does not remove or significantly weaken the effect of the separating oil. Thus a leavened, or even unleavened dough product can be frozen before baking. This is important especially in the restaurant and institutional-kitchen sectors, in which raw-frozen goods account for a significant share of the products sold. However, the product is also suitable for retail sales, both as a raw frozen product and as a product ready-baked at the factory.

According to one embodiment, by means of the method according to the invention, bakery products can be flavoured without altering the composition of the actual dough, by using flavoured oil as the separating oil layer. The advantage of the embodiment depicted is that the same dough preform can be used for end products flavoured in several different ways.

In the following, some embodiments of the invention are examined with reference to the accompanying drawings, in which:
Figure 1 shows a roll, which is in a closed position, according to one embodiment of the invention,
Figure 2 shows a cross-sectional view of the roll according to Figure 1, in which can be seen the splitting zone between the cover parts, which is shown by a broken line, and
Figure 3 shows the roll according to Figure 1, in a partly opened position.

According to a preferred embodiment, in the bakery-product openable by hand, manufacturing method according to the present invention, a dough, such as a yeast dough, is prepared according to a recipe in a dough machine. In this connection, the term yeast dough refers to a dough that contains yeast. The dough typically contains at least flour, water, yeast, salt, and possibly baking additives. In addition, there can be, for example, bran or grains in the dough. The dough is mixed in a dough machine for a few minutes, the time depending on machine and the dough and being, for example, about 2 ... 5 minutes, at a low speed and, in addition, for a slightly longer period, such as 5 ... 15 minutes, at a higher speed. The dough is typically allowed to rest for about 10 minutes after kneading.

After mixing, the dough is thinned into a dough sheet of a suitable thickness for traditional methods, for example, onto a conveyor belt or other base. The thinning can be implemented using a shaping method suitable for automatic production, such as by running the dough between rolling rollers. The rested dough can be thinned, for example, on an appropriate line using a satellite thinner as well of thinning rollers into a dough sheet of the desired final thickness. According to the product, the final thickness, i.e. the sheet thickness, varies from two to five millimetres. The dough preform can also be thinner or thicker than this.

Next, the thinner dough sheet is cut by roller cutters into sheets of the desired width, such as about 120-millimetre-wide dough strips. The upper surface of the dough strips are sprayed with a thin layer of a separating agent, such as fat, preferably oil, by means of a pneumatically operated atomizer apparatus. In the embodiment described here, the use of oil as the separating agent is depicted, but, according to the invention, some other separating agent described above can be used. Alternative separating agents include suitable water-milk-protein mixtures, fibre gels, water-lecithin mixtures, and similar. Thus, the scope of the invention is not restricted to fat as the separating agent, but instead other suitable substances can be considered. Similarly, the separating agent can also be applied to the surface of the dough other than by spraying. Alternative methods include a drip feed, or, for example, spreading by a roller. In the embodiment described here, the separating agent is, however, sprayed onto the surface of the dough, but according to the invention, some other of the application methods described above can also be used.

Spraying is preferably directed to the entire upper surface, but also only part of the surface can be oiled. The sprayed layer is extremely thin and can be regarded as a kind of film. A vegetable oil suitable for foodstuffs use, for example, which is preferably in a fluid state, is suitable for use as the separating fat. It can be, for example, rapeseed oil, colza oil, sunflower oil, flaxseed oil, or olive oil. The oil can have a neutral taste, or it can, if desired, also be aromatized with flavours, such as butter, cheese, herb, or garlic aromas. On the other hand, the oil can contain, or if desired have added to it, health-promoting substances, such as Omega fatty acids. The oil can also be applied to the surface of the dough strips using some other method, but spraying achieves an even surface and can be easily automated.

After the application of the separating agent, the dough strips are turned by a turner on top of each other, so that the oil surface remains between the two dough layers. In this connection, this oiled area between the dough layers is referred to as a splitting zone. This forms a band, the first side of which, i.e. the folding seam, is closed, and the second side, i.e. the opposite side to the folding seam, is open. In folding, the dough is folded in such a way that the dough layers on top of each other are essentially on top of each other, which in this connection means that the edges of the second side of the layers are parallel when examined by eye. More specifically, care must be taken to ensure that the free longitudinal edges, i.e. the opposite edge to the folding seam, of the dough preform folded on top of each other, are essentially aligned, so that the finished product will be easy to open.

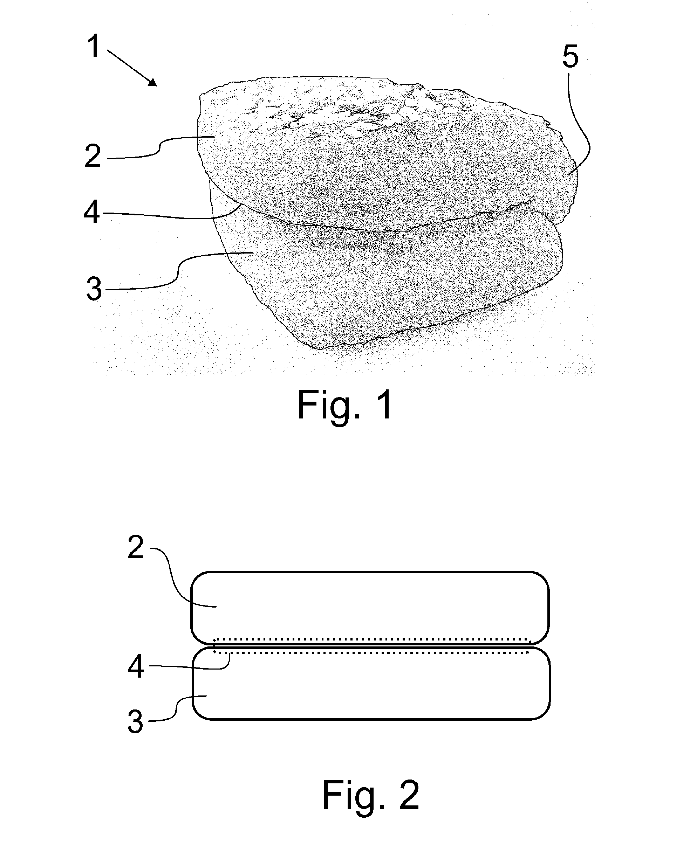

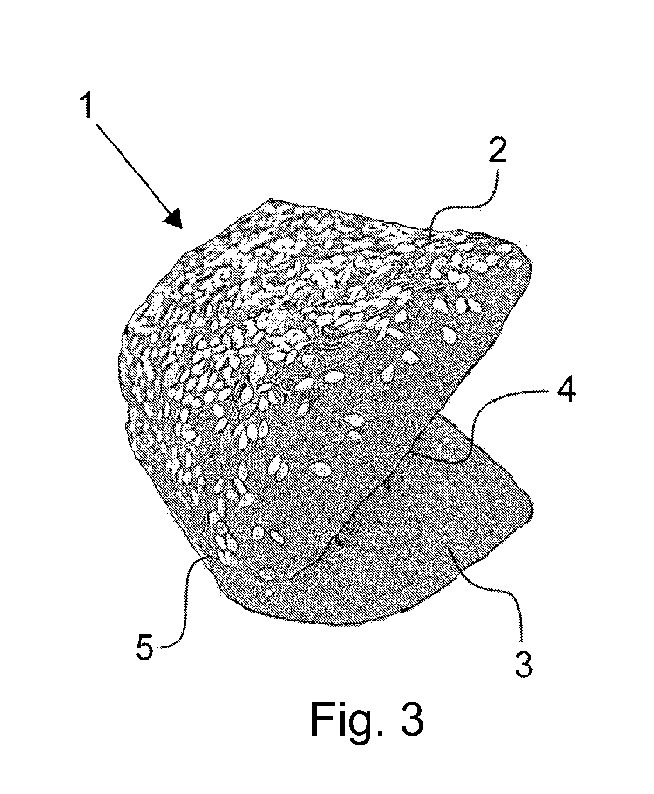

After folding, the doubled strips travelling on the line are guided to a transverse cutter, such as a guillotine cutter, to be shortened into the desired lengths. After transverse cutting, raw products 1 according to Figures 1 - 3 are created, which comprise a first cover part 2 and a second cover part 3, which are connected by a spine part 5, which is the neck that arose during folding. The splitting zone 4 (Figure 2), which comprises a separating oil layer, then remains between the cover parts 2, 3, its task being to prevent the cover parts 2, 3 adhering to each other during baking, or storage, or both, in such a way that tools would be needed to separate them from each other. The fat content of the splitting layer is substantially, at least 20 %, greater than in the cover parts 2, 3 outside the splitting zone 4. Thus, it can be stated that the part of the bakery product containing substantially more fat than the dough preform, and which is in the area ofthe sides of the cover parts 2, 3 folded on top of each other, belongs to the splitting zone. Overall, however, quite little of the separating substance is needed, about 0.1 ... 5 %, particularly 0.5 ... 2 %, of the total mass of the final bakery product. The purpose of the splitting-zone separating oil layer is thus not actually to separate the cover parts 2, 3, instead they can be baked lying on top of each other. The added oil layer, however, permits the final product to be easily opened by hand without tools, along the splitting zone 4.

According to one embodiment, the separating oil is flavoured with a suitable flavouring, such as garlic or chilli. The flavouring is intended to create a flavoured bakery product, without the dough having to be flavoured. Thus, products with different flavours can be obtained from the same dough by only flavouring the separating oil.

According to one embodiment, the upper surface of the turned dough strips, i.e. the face that remains the upper surface of the product is, coated with a make-up agent. The make-up agent can be, for example, water or some other surface-brushing agent. Alternatively or in addition to this, seeds, grains, or flour can be used as a make-up agent to enliven the appearance of the product. Depending on the apparatus used, this can be done either before or after longitudinal cutting by a guillotine cutter.

After transverse cutting, individual pieces have been formed from the turned dough bands, i.e. baking preforms, which are directed to leavening. Leavening takes place immediately after the forming of the individual pieces, in a separate leavening system. According to one embodiment of the invention, rising takes place in a leavening spiral, in which the products travel on top of a mesh belt for the entire duration of leavening. Depending on the product and the desired leavening requirement, the relative humidity of the air in leavening is about 50 ... 70 RH, the temperate is about +34 ... 38°C, the air circulation blowing about 50 ... 65%, and the rising time 30 ... 60 minutes. Leavening can also take place using a different kind of leavening apparatus, in which case the values may vary slightly.

After rising, the risen products can be frozen for later baking, or they can be baked immediately and then be cooled and frozen as ready-baked products.

According to the embodiment referred to first, the baking preforms are guided from rising to rapid freezing, in which the products are frozen preferably using a spiral freezer. Depending on the size of the product, the freezing time is about 20 ... 40 minutes. The freezing temperature is about -28 ... -32°C. The freezing can also be implemented using a different type of freezing apparatus, such as in a freezer tunnel, but in that case the values would be very close to those given above. After freezing, the products are packaged, to protect them from freeze drying. These pre-leavened and frozen products can be baked, for example, in the consumer's home, in a bakery, shop, or restaurant after a period of thawing, in which the product are allowed to thaw at room temperature for about 30 .., 100 minutes. The products can also be allowed to thaw, for example, in a café or bakery overnight in a cool space, such as a cold room, at about +5°C and protected from drying out_ After thawing, the products are baked in an oven at 180 ... 220°C for about 8 ... 15 minutes. Of course, the baking time is affected by the size of the product, as well as by the oven and how full it is.

According to the last-mentioned embodiment, the baking preforms are guided from rising to a continuous-operation rotating-grate oven. The products are baked in the oven at 180 ... 220°C for about 8 ... 15 minutes. The size of the product can, however, lengthen or shorten the baking time. Baking can also take place using a different type of oven, such as a rack oven, but the values would be similar to those given above. After baking, the products are cooled in a cooling spiral for about 20 ... 40 minutes, after which they are guided to a spiral freezer, in which the products are frozen at about -30°C for about 20 ... 40 minutes. Cooling and freezing can also take place using a different types of cooling and freezing apparatuses, such as cooling and freezing tunnels, but the values would be similar to those given above. After cooling, the products are packaged to protect them from freeze drying. The products can be thawed at room temperature, in a microwave oven, in an oven, or in a cold room, depending on the application and need. Alternatively, products that have been baked after leavening can be packed directly without freezing and delivered for sale.

Products manufactured using the method according to the invention, for example, yeast-dough-based rolls, can easily be opened after baking, without separate tools, such as knives, without the products being split mechanically separately after baking. In addition, the oil preserves the moisture in the centre of the product. Double-turned products, the dough parts of which remain separate even during baking, also acquire more corners and edges during baking which create more aromas during baking. Thus, the bakery product openable by hand according to the invention comprises two cover parts 2, 3 that are essentially exactly aligned, the one common edge of which is joined by a spine part 5 (Figure 1). The opposite edge to the spine part 5 is thus open, so that there are many aromatic baking edges in the product. The opposing faces of the two cover parts 2, 3 are treated with a separating oil layer, on with some other ofthe separating agents described. The oil layer is extremely thin and, according to one embodiment, it is absorbed at least partly into one or both cover parts 2, 3. Thus, the absorbed or unabsorbed layer creates provides a separating zone 4 using oil, between the dough layers folded on top of each other, i.e. the covers 2, 3, which prevents the dough layers from being baked onto each other, so that they would be difficult to separate from each other by hand. In other words, the oiled splitting zone 4 separates the dough layers, in such a way that they are easy to separate from each other without tools, even after freezing or baking or both. The oil of the splitting zone 4 is cooking oil, or a corresponding oil suitable for use in foodstuffs. The oil content of the splitting zone 4 is more than 10 %, preferably more than 20 %.

According to one embodiment, the upper face 2 of the bakery product 1 openable by hand is equipped with a make-up agent, which is, for example, water or some other surface-brushing agent. Alternatively or in addition, the make-up agent can be, for example, seeds, grains, or flour, or some combination of these.

It is also possible to implement other types of product in accordance with the invention. This is because, with the aid of the separating oil layer or zone according to the invention it is possible to implement products with several layers, for example, three-layer hamburger bases, or dessert cakes. Alternatively, according to the invention it is possible to implement, for example, a bakery product with a square cross-section, three sides of which are baked onto each other and only one side can be opened thanks to a separating-oil zone, so that the product is a kind of openable bread pocket. Thus, the splitting layer 4 bounds the spine part 5 on three sides and the cover part 2, 3 on two sides. Thus, the above description should not be regarded as a restrictive presentation, but instead the scope of protection of the invention will be examined to the full extent of the accompanying Claims.

## Claims

1. Method for manufacturing a bakery product (1) openable by hand, the method comprising the steps of:
- providing dough,
- forming a baking preform of a desired shape from the dough,
- leavening the baking preform, and
- baking or frozing the leavened baking preform,
**characterized by**, forming at least two dough layers (2, 3) on top of each other in the baking preform, between the opposing surfaces of which, on at least part of the area, adding separating fat for forming a splitting zone (4) in the bakery product (1).

2. Method according to Claim 2, **characterized by** folding the baking preform in such a way that its free longitudinal edges are essentially aligned.

3. Method according to Claim 1 or 2, **characterized by** coating the dough preform by spraying.

4. Method according to any of Claims 1-3, **characterized in that** the separating fat is oil, preferably cooking oil.

5. Method according to any of the above Claims, **characterized by** coating and folding the preform prior to leavening.

6. Method according to any of the above Claims, **characterized in that** the dough is yeast dough.

7. Method according to any of the above Claims, **characterized in that** the separating fat is flavoured.

8. Method according to any of the above Claims, **characterized in that** the cover part (2) is equipped with a make-up agent, such as water or some other surface-brushing agent, or with seeds, grains, or flour, or some combination thereof.

9. Method according to any of the above Claims, **characterized in that** the second half (2, 3) of the dough preform is coated entirely with separating oil.

10. Bakery product (1), which comprises two essentially aligned cover parts (2, 3), which are made from yeast dough, **characterized in that** between the cover parts there is a splitting zone (4), the fat content of which is essentially greater than in the cover parts (2, 3) outside the splitting zone (4) and at which splitting zone (4) the cover parts (2, 3) of the bakery product (1) can be separated from each other without tools, after the baking of the bakery product (1).

11. Bakery product (1) according to Claim 10, **characterized in that** the cover parts (2, 3) are of unbaked dough, preferably leavened unbaked dough, and the splitting zone (4) comprises a separating-fat layer between the cover parts.

12. Bakery product (1) according to Claim 10 or 11, **characterized in that** it is frozen.

13. Bakery product (1) according to any of Claims 10 - 12, **characterized in that** it is baked.

14. Bakery product (1) according to any of Claims 10-13, **characterized in that** at least one common edge of the cover parts (2, 3) is joined by a spine part (5) made from the same dough for keeping the cover parts (2, 3) hinged together.

15. Bakery product (1) according to any of Claims 10 - 14, **characterized in that** fat is absorbed at least partly in one or both of the cover parts (2, 3) in the vicinity of the splitting zone (4).

16. Bakery product (1) according to any of Claims 10 - 15, **characterized in that** the fat in the splitting zone is oil, preferably cooking oil.

17. Bakery product (1) according to any of Claims 10-16, **characterized in that** at least one cover part (2) is treated with a make-up agent, such as water or some other surface-brushing agent, or with seeds, grains, or flour, or some combination of these.

18. Bakery product (1) according to any of Claims 10 - 17, **characterized in that** it is a roll.
